Europäisches Patentamt

European Patent Office (11) Numéro de publication : **0 152 339**

Office européen des brevets **B1**

(12) **FASCICULE DE BREVET EUROPÉEN**

(45) Date de publication du fascicule du brevet :
17.05.89

(51) Int. Cl.⁴ : **H 02 P 5/178**, H 02 K 23/02

(21) Numéro de dépôt : 85400176.5

(22) Date de dépôt : 01.02.85

(54) Dispositif d'entraînement électrique en basse tension d'une masse tournante de forte inertie et moteur faisant partie de ce dispositif.

(30) Priorité : 06.02.84 FR 8401777

(43) Date de publication de la demande :
21.08.85 Bulletin 85/34

(45) Mention de la délivrance du brevet :
17.05.89 Bulletin 89/20

(84) Etats contractants désignés :
DE GB IT

(56) Documents cités :
EP-A- 0 072 297
FR-A- 1 520 347
US-A- 3 753 068
REVUE GENERALE DE L'ELECTRICITE, vol. 85, no. 11, novembre 1976, pages 883-893, Paris, FR; M. CHOTARD: "La vitesse variable et les automatismes dans les industries diverses"

(73) Titulaire : S.A.M.M.- Société d'Applications des Machines Motrices
224, Quai de Stalingrad
F-92130 Issy-les-Moulineaux (FR)

(72) Inventeur : Geiger, Jean-François
12 Avenue Félicien David
F-92700 Colombes (FR)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France

**Description**

La présente invention a pour objet un dispositif d'entraînement électrique d'une masse tournante de forte inertie, comprenant un moteur électrique alimenté par une source de courant continu de basse tension, par exemple une batterie de 24 V, par l'intermédiaire d'un convertisseur d'énergie électronique destiné à alimenter l'induit du moteur et d'une alimentation régulée qui commande l'inducteur.

L'invention a également pour objet le moteur électrique faisant partie de ce dispositif.

Le domaine d'application principal, mais non exclusif, de ce dispositif est la commande en rotation d'engins militaires terrestres lourds : tourelles de chars de bataille, systèmes anti-aériens, affûts à canons de gros calibres, l'invention pouvant être également appliquée à la commande de canons de marine.

Le problème à résoudre est celui du pointage de l'arme principale (canons du char) à l'aide d'un moteur, cette arme faisant partie d'une masse oscillante, susceptible d'être orientée en site (ou hauteur) dans le plan vertical. Dans la direction horizontale, la masse oscillante est liée à la masse tournante (par exemple tourelle de char) qui asure le pointage de l'arme en azimut (ou gisement).

La masse tournante supporte également, en plus de l'arme, les munitions, le système de conduite de tir, des moto-réducteurs, l'équipage de l'engin et le blindage de protection.

L'ensemble représente une masse totale qui peut dépasser 15 tonnes, et dont le mécanisme doit actuellement satisfaire simultanément plusieurs impératifs :

exécuter des mouvements de rotation rapides afin d'orienter le canon sur la cible dans un délai court ;

pointer l'arme de manière précise par rapport à la ligne de visée, dans les trois directions de l'espace, afin d'assurer un tir précis ;

réaliser des vitesses de pointage très faibles, la cible à suivre pouvant se déplacer lentement à grande distance (supérieure à 1 000 m) ;

s'affranchir des perturbations mécaniques rapides occasionnées sur la tourelle par le véhicule porteur en marche sur un terrain accidenté ;

être compatible avec la source d'énergie existante, c'est-à-dire 24 V en courant continu avec des batteries, dans une large majorité des châssis utilisés dans le monde.

Les ensembles de motorisation connus, destinés au pointage de canons sont actuellement réalisés suivant deux technologies : une technologie hydraulique et une technologie électrique.

L'invention concerne exclusivement les systèmes de commande entièrement électriques, dans lesquels la source d'alimentation disponible délivre habituellement une tension moyenne de 24 V continu, et est généralement constituée d'une génératrice associée à des batteries montées en tampon. Leur capacité se situe, pour des chars lourds, entre 300 Ah et 500 Ah.

A partir de cette source de courant continu, les moteurs d'entraînement des masses tournante et oscillante peuvent être alimentés soit en forte tension, soit en faible tension.

Pour faciliter la compréhension de l'exposé des dispositifs antérieurs connus, ceux-ci ont été schématiquement représentés aux Figures 1 à 6 annexées.

La Figure 1 est un schéma électrique simplifié d'un dispositif connu de commande de la masse tournante en forte tension ;

la Figure 2 est un diagramme représentant l'accélération en fonction de la vitesse de rotation de la masse tournante entraînée par un système selon la Figure 1 ;

la Figure 3 est un diagramme montrant la variation de la puissance fournie par le moteur en fonction de la vitesse de rotation de la masse tournante, pour le système d'entraînement schématisé à la Figure 1 ;

la Figure 4 est un schéma électrique simplifé d'un second dispositif d'entraînement connu en haute tension ;

la Figure 5 est un schéma électrique simplifié d'un dispositif d'entraînement connu en faible tension ;

la Figure 6 est un diagramme illustrant l'accélération en fonction de la vitesse de rotation de la masse tournante avec un système d'entraînement selon la Figure 5.

1) Commande de la rotation de la masse tournante en forte tension

a) La tension initiale de 24 V est amplifiée (par exemple à 200 V) au moyen d'un groupe tournant comprenant un moteur et une génératrice amplificatrice (métadyne). La variation de la tension délivrée nécessaire pour faire varier la vitesse des moteurs, est obtenue en jouant sur l'excitation de la génératrice. L'ensemble est lourd, encombrant et bruyant, et de faible rendement (au maximum 40 %). La fabrication est peu reproductible, les caractéristiques des métadynes présentant de grandes variations en fonction de la charge. Les vitesses de ralenti obtenues sont élevées et peu stables.

Cette technologie est considérée comme périmée.

b) « La haute tension » est obtenue grâce à un convertisseur d'énergie statique élévateur, à savoir un système à commutation électronique qui fournit la puissance nécessaire pendant les accélérations de la masse tournante.

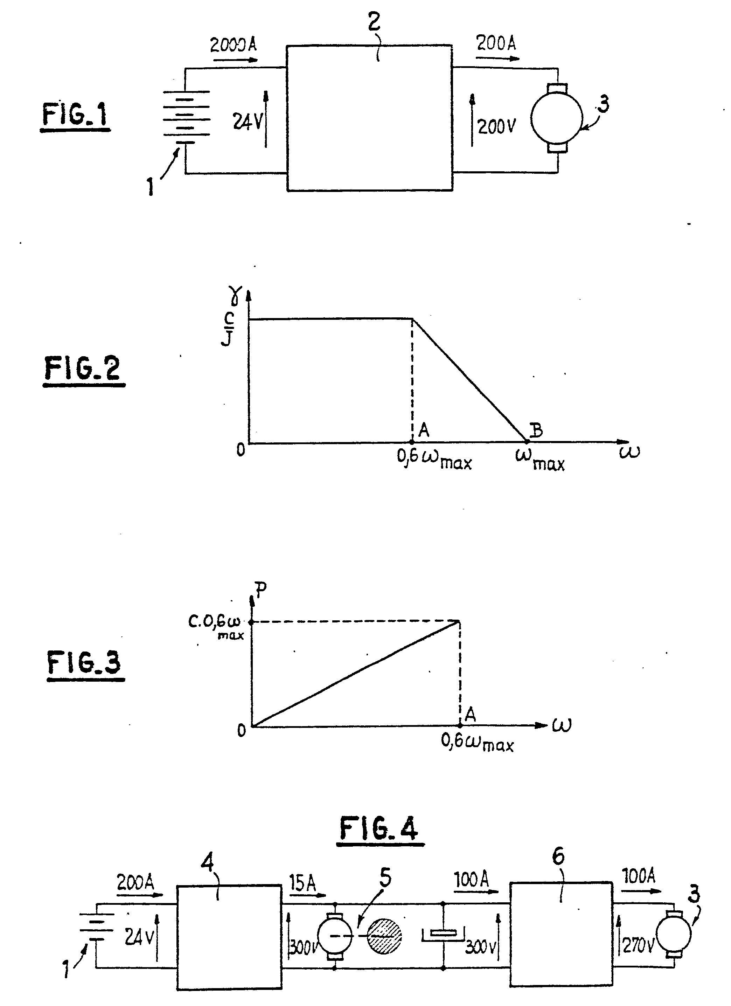

Un tel dispositif est illustré à la Figure 1, sur laquelle un groupe 1 de batteries (en châssis), délivre un courant continu en 24 V ; le convertisseur d'énergie 2 relié au groupe 1 est disposé par exemple dans la tourelle d'un char, et le moteur 3 d'entraînement de la masse tournante est relié au convertisseur 2.

Le moteur 3 d'entraînement est à courant continu et excitation séparée par aiments. Son coefficient de couple K est donc constant, et déterminé en fonction de la vitesse maximale.

Pour des raisons de tenue des composants électroniques du convertisseur 2, le courant doit être limité en sortie à une valeur I. Le couple maximum du moteur est donc $C = KI$. Lors d'une commande de pleine vitesse de la masse tournante, l'accélération angulaire est :

$$\gamma = C/J, \text{ J étant le moment d'inertie}$$

soit

$$\gamma = KI/J$$

Cette valeur est constante tant que le courant I reste à sa valeur maximum. D'autre part, la tension variable aux bornes du moteur est :

$U_{moyen} = E + RI$, E étant la f.c.é.m. et R la résistance de l'induit. La tension $U_{moyen}$ étant limitée à la valeur crête disponible en sortie du convertisseur 2, le terme RI diminue lorsque E est important, c'est-à-dire lorsque la vitesse est élevée. L'accélération $\gamma$ en fonction de la vitesse $\omega$ a donc l'allure illustrée à la Figure 2. La puissance instantanée fournie par le moteur est :

$$P = C\omega$$

La Figure 3 montre la variation de la puissance P en fonction de la vitesse : dans la partie OA de la courbe, la puissance croît linéairement à partir de 0 jusqu'à la valeur $C.0,6\omega_{max}$. On constate ainsi que la puissance délivrée est moins importante aux faibles vitesses. Cela se traduit pour la masse tournante par une montée en vitesse lente, d'où une période pour effectuer un demi-tour, trop longue vis-à-vis des temps de ralliement sur la cible exigés pour les chars ou affûts modernes.

Pour remédier à ce défaut, on est obligé d'accroître le couple C en augmentant le courant I, mais on aboutit ainsi aux inconvénients suivants :

courants très importants à l'entrée du convertisseur, incompatibles avec les générations dont disposent la plupart des châssis. On arrive en effet à des valeurs de 2 000 ampères ;

adjonction de batteries ou condensateurs encombrants et onéreux dans la tourelle, pour éviter ces pics de courant à travers le joint tournant de liaison entre le châssis et la tourelle ;

perturbations électromagnétiques par conduction dans la ligne d'arrivée du courant élevées, nécessitant la mise en place d'un système d'antiparasitage coûteux ;

nécessité d'adjoindre une deuxième source d'alimentation stabilisée pour les appareils de conduite de tir sophistiqués des tourelles actuelles, la tension étant trop perturbée au joint tournant ;

les composants électroniques de puissance à l'entrée du convertisseur doivent conduire un courant de 2 000 ampères. Ce sont des transistors de commutation onéreux, en raison de leur importante surface de silicium. Ils viennent s'ajouter à ceux utilisés dans le pont en H qui commande directement le moteur et augmentent la chaleur totale dissipée ;

comme les pertes par effet Joule sont proportionnelles au carré de l'intensité du courant, le rendement global n'est pas élevé. Le convertisseur étant contenu dans un coffret étanche devant satisfaire aux normes militaires de températures, son refroidissement impose une surface de dissipation importante ou une ventilation forcée supplémentaire. Cela conduit à une augmentation du volume, du poids et du coût ;

les câbles, en cuivre, de liaison avec la génération sont de grosse section : ils s'inscrivent difficilement dans la structure de la tourelle en raison de leur manque de souplesse, et sont reliés à des connecteurs de forte taille, onéreux ;

la tension de 200 V en sortie du convertisseur peut être considérée comme dangereuse pour l'équipage de l'engin et nécessite de toute façon de prévoir un équipement satisfaisant aux normes d'isolement à 500 V ;

pendant la phase de freinage de la masse tournante, son énergie cinétique ne peut être récupérée dans les batteries, car le système est irréversible. Elle est transformée en chaleur, augmentant les problèmes de dissipation thermique.

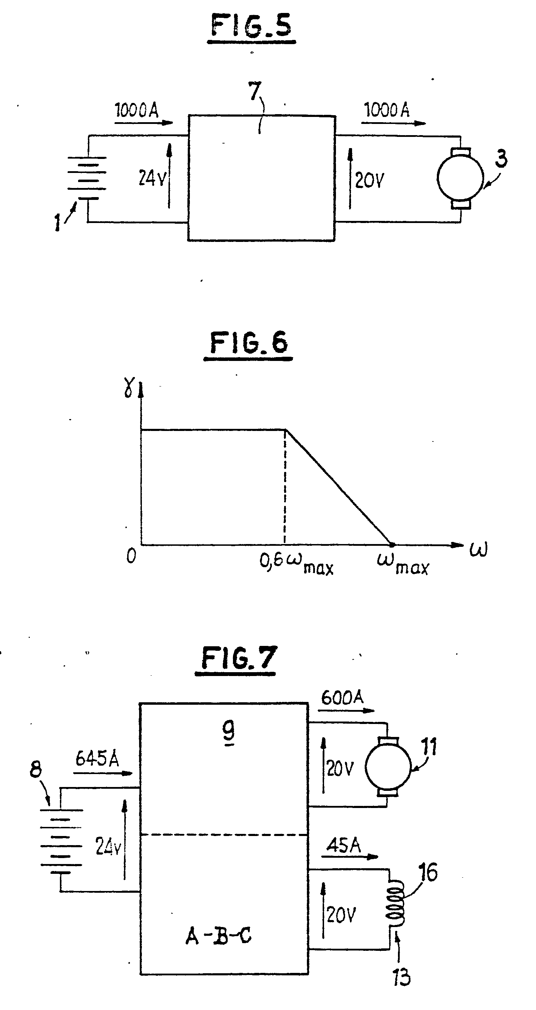

c) Dans un autre système connu de commande en forte tension, schématisé à la Figure 4, le convertisseur 4 est relié à un moteur-générateur 5 accouplé à un accumulateur d'énergie cinétique (volant d'inertie). Ce moteur-générateur est monté en tourelle comme le convertisseur 4, et fournit au moteur 3 sa tension d'alimentation, par l'intermédiaire d'un hacheur 6 (monté en tourelle).

Le convertisseur 4 de faible puissance 24 V/300 V transmet l'énergie moyenne nécessaire pour entretenir la rotation du moteur-générateur 5 accouplé à son volant d'inertie, l'ensemble étant monté en tourelle.

Pour éviter un encombrement catastrophique, cet ensemble doit tourner à une vitesse élevée (plus de 10 000 tours/minute), de façon à emmagasiner une énergie cinétique suffisante. Cette dernière est utilisée pour fournir la puissance demandée pendant les accélérations de la masse tournante. Le moteur 5 travaillant en générateur fournit alors 300 V à l'entrée du hacheur 6, avec un courant maximum de 100 ampères, qui traverse également le moteur d'entraînement 3 à excitation constante par aimants. Des batteries de condensateurs sont nécessaires à l'entrée du hacheur 6 pour éviter des variations de tension trop importantes. Le moteur-générateur 5 peut être remplacé par deux machines : un moteur 24 V et une génératrice 300 V, supprimant ainsi le convertisseur 4.

Le fonctionnement du moteur d'entraînement 3 est alors identique au cas précédent, c'est-à-dire que la puissance instantanée sur l'arbre croît avec la vitesse.

Les inconvénients dûs au forts courants sont évités. Mais, il subsiste des points faibles évidents :

ce matériel est très encombrant et onéreux, un convertisseur, un ensemble tournant spécial, des condensateurs venant s'ajouter au hacheur. Cela interdit de monter un tel système dans des tourelles qui n'ont pas été spécialement étudiées pour le recevoir ;

l'accumulateur d'énergie cinétique tourne en permanence, et constitue en raison de sa vitesse de rotation, une source de bruits et de vibrations ;

les problèmes dûs à la haute tension restent entiers ;

le rendement global est faible en raison du nombre d'éléments mis en jeu. En particulier dans le cas d'une utilisation de tourelle en stabilisation, la puissance moyenne exigée en sortie impose à la génération du châssis de fournir un courant moyen plus élevé que dans les systèmes plus simples.

2) Commande de la rotation de la masse tournante en faible tension

Dans le dispositif de commande en faible tension schématisé à la Figure 5, un hacheur 7 (monté en tourelle), est interposé entre les batteries et le moteur d'entraînement 3. Le moteur 3, alimenté en 20 V maximum, est de conception classique : son coefficient de couple est constant et limité par la vitesse maximale demandée (plus celle-ci est élevée, plus il est petit).

Cette tension étant faible, le courant de sortie doit être très important pour obtenir une puissance moyenne acceptable. En valeur instantanée, elle varie en effet linéairement en fonction de la vitesse, comme dans les systèmes précédents : $P = C\omega$, le couple maximum C étant constant et fixé par la valeur maximale du courant I admissible dans le hacheur 7.

La courbe d'accélération $\gamma$ en fonction de la vitesse (Figure 6) est donc toujours la même.

Le manque de performances en accélération de ce système se comprend aisément si l'on considère la tension instantanée U aux bornes du moteur :

$$U = E + RI$$

RI étant constant pendant l'accélération, la tension U varie comme la f.c.é.m. E du moteur : elle est une fonction linéaire de la vitesse. La tension en sortie du hacheur est ainsi faible aux basses vitesses, et celui-ci est mal exploité, car il ne délivre sa puissance maximale qu'en fin d'accélération.

Pour compenser en partie ce défaut, le courant doit être élevé, à la fois à l'entrée et à la sortie du hacheur, ce qui entraîne tous les inconvénients des forts courants cités dans le premier dispositif ci-dessus, avec de plus la nécessité de réaliser un convertisseur quatre quadrants de 1 000 ampères (avec des coûts importants pour les composants de commutation).

Enfin pour compléter l'exposé de la technique antérieure, il convient de mentionner le EP-A-72 297 qui décrit un moteur électrique à courant continu dans lequel deux sources d'énergie magnétique sont placées en série dans le même circuit magnétique. Ces sources sont constituées par des aimants et des bobines disposés de manière alternée autour de l'induit et, dans certaines conditions, le flux magnétique des bobines peut venir en soustraction de celui des aimants. Cette soustraction ne doit cependant pas être trop poussée, afin de ne pas démagnétiser les aimants.

L'invention a donc pour but de réaliser un dispositif d'entraînement de la masse tournante ne présentant pas ces divers inconvénients ainsi qu'un moteur faisant partie de ce dispositif.

Le dispositif visé par l'invention comprend, pour l'entraînement de la masse tournante en gisement, un moteur électrique pourvu d'un inducteur et d'un induit, alimenté par une source de courant continu par l'intermédiaire d'un convertisseur d'énergie électronique destiné à alimenter l'induit du moteur.

Suivant l'invention, l'inducteur du moteur comprend des pôles constitués chacun d'un aimant et d'une bobine d'excitation à courant unidirectionnel, et chaque aimant ainsi que sa bobine correspondante sont placés l'un au-dessus de l'autre entre la culasse et l'axe, de façon que ces deux sources d'énergie magnétique agissent toutes deux sur les mêmes parties des mêmes conducteurs de l'induit, et ce dispositif est pourvu d'un système électronique de commande du courant dans les bobines de l'inducteur capable de maintenir durant les accélérations et décélérations, une tension de sortie du convertisseur maximum dans une plage de vitesses étendue, le courant dans les bobines de l'inducteur étant unidirectionnel et l'augmentation de son intensité diminuant progressivement le coefficient de couple du moteur, qui est maximum lorsque les bobines ne sont pas alimentées.

A titre d'exemple numérique, non limitatif, pour une source de courant continu de 24 V, la valeur maximum de l'intensité du courant dans l'induit peut être fixée à 580 ampères environ, juste au-dessous d'une valeur de 600 ampères par exemple, pour laquelle les composants sont dimensionnés. Pendant les phases où un fort couple est demandé, (accélérations et décélérations) le système maintient une tension de sortie du convertisseur maximum à partir d'une fraction prédéterminée de la vitesse maximale, par exemple 20 %.

Dans une forme de réalisation du dispositif, les aimants sont au nombre de quatre, réalisés en un alliage samarium-cobalt, le fil de chaque bobine étant enroulé autour de sa pièce polaire selon des surfaces parallèles à la portion de culasse correspondante afin de pourvoir créer une induction magnétique de même direction, mais de sens opposé à celle de l'aimant correspondant.

Suivant un mode de réalisation préféré de l'invention, le système électronique de commande du courant dans l'inducteur comprend :

une boucle d'asservissement du courant de l'induit à une valeur maximum prédéterminée ;

une boucle d'asservissement de la tension de l'induit à une valeur maximum prédéterminée ;

et une chaîne de comparaison de la vitesse de rotation de la masse tournante avec une faible vitesse affichée, pour maintenir le coefficient de couple à une valeur maximum aux vitesses inférieures à la vitesse affichée, en maintenant à une valeur nulle le courant dans les bobines de l'inducteur, quelle que soit la valeur du courant dans l'induit.

Le dispositif d'entraînement selon l'invention présente de nombreux avantages, notamment ceux des systèmes à faible tension en évitant les inconvénients dûs aux forts courants, d'où notamment une faible dissipation de chaleur et un bon rendement à puissance maximum.

D'autres particularités et avantages de l'invention apparaîtront au cours de la description qui va suivre, faite en référence aux dessins annexés qui en illustrent un mode de réalisation à titre d'exemple non limitatif :

la Figure 7 est un schéma électrique global simplifié d'un mode de réalisation du dispositif d'entraînement en rotation de la masse tournante conforme à l'invention ;

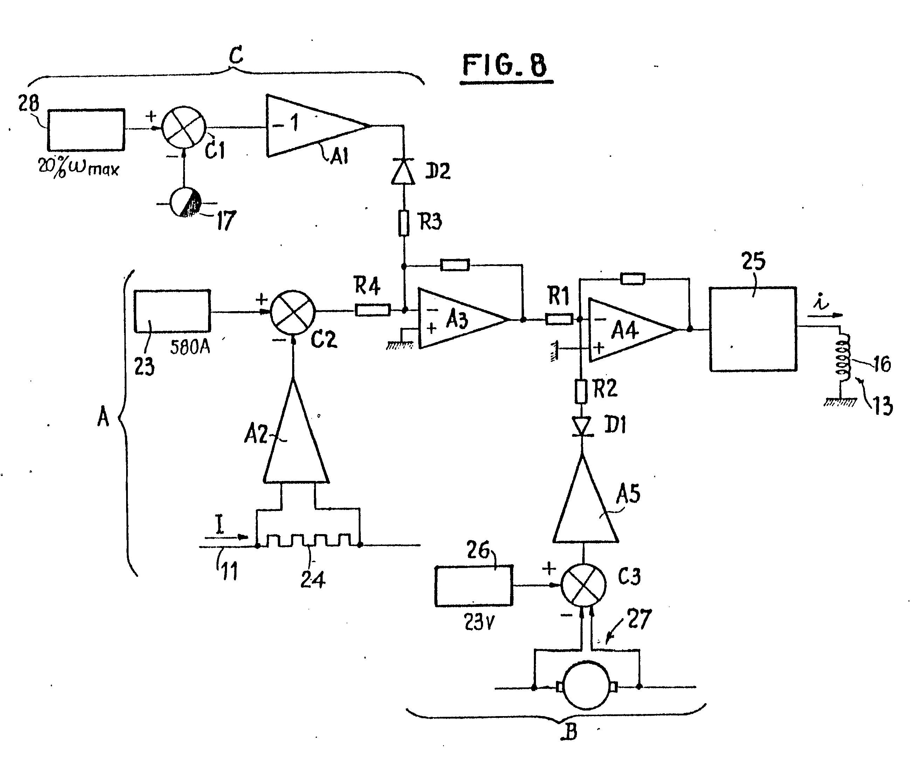

la Figure 8 est un schéma électrique montrant une forme de réalisation de la commande de l'inducteur avec des boucles d'asservissement du courant et de la tension de l'induit (rotor) du moteur à des valeurs maximum prédéterminées ainsi que de la chaîne de comparaison précitée ;

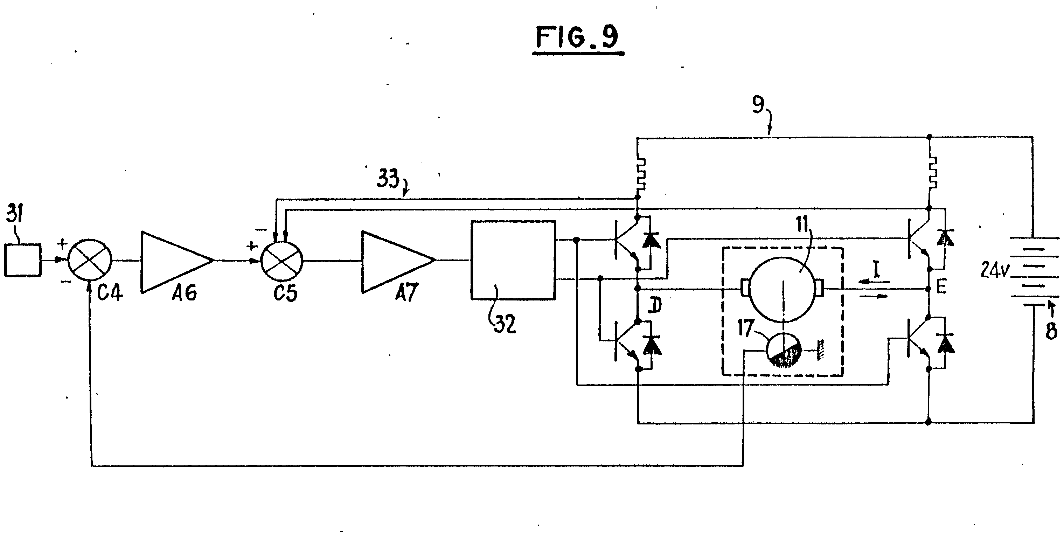

la Figure 9 est un schéma électrique de la commande de l'induit du moteur ;

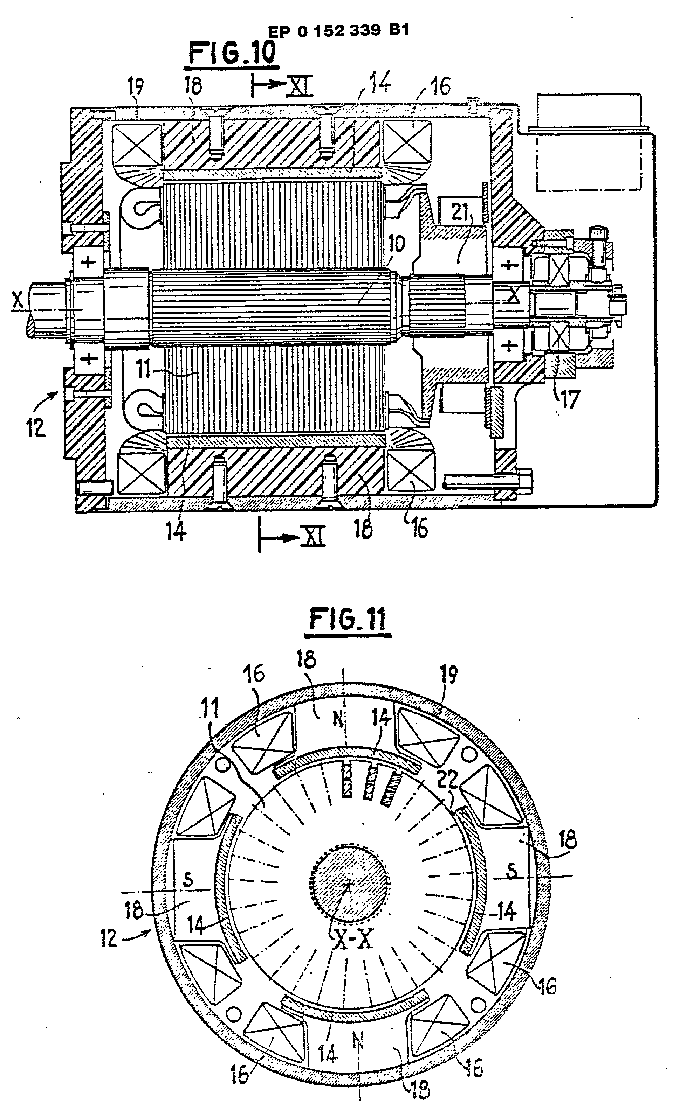

la Figure 10 est une vue mi-coupe axiale mi-élévation d'une forme de réalisation du moteur électrique d'entraînement de la masse tournante conforme à l'invention ;

la Figure 11 est une vue en coupe transversale du moteur suivant le plan XI-XI de la Figure 10 ;

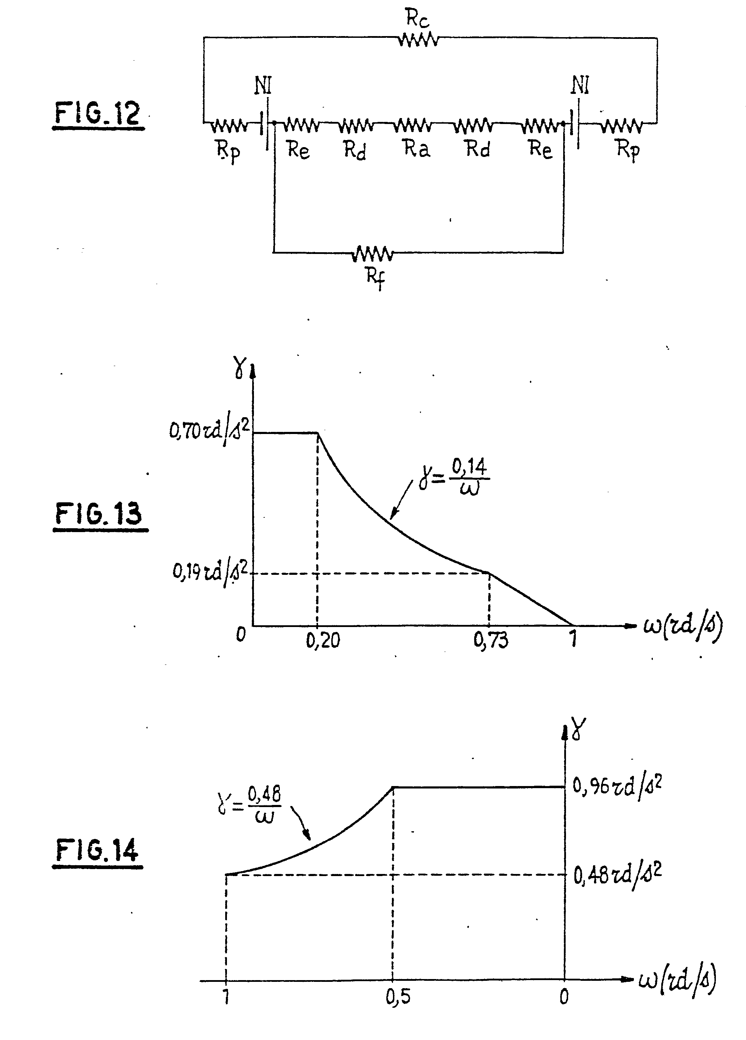

la Figure 12 est un schéma représentant le circuit magnétique créé par une paire de pôles du moteur des Figures 10 et 11, dans lequel les aimants sont remplacés par des générateurs de flux ;

la Figure 13 est un diagramme représentant l'accélération en fonction de la vitesse de rotation de la masse tournante entraînée par un dispositif selon l'invention ;

la Figure 14 est un diagramme illustrant la courbe de décélération à partir de la pleine vitesse avec un dispositif selon l'invention.

Le dispositif représenté aux dessins est destiné à assurer l'entraînement en rotation et plus précisément en gisement, d'une masse tournante de forte inertie telle qu'une tourelle de char lourd ou un affût de défense anti-aérienne, cette masse pouvant atteindre une quinzaine de tonnes.

Ce dispositif de motorisation en gisement de la masse tournante est complété par des moyens non représentés, d'entraînement en site de la masse oscillante. Ces moyens d'entraînement en site sont en effet connus et comprennent par exemple : un convertisseur d'énergie électronique 24 V-200 ampères du type hacheur en pont en H quatre quadrants à moteur électrique à courant continu avec balais à excitation séparée par aimants au samarium-cobalt, alimenté en 24 V maximum, une électronique de commande du hacheur et de régulation de la vitesse du moteur par dynamo-tachymétrique avec boucle secondaire de courant dans l'induit, des systèmes de sécurité, ainsi qu'un réducteur de vitesse à engrenages ou un vérin à vis.

Le dispositif de motorisation en gisement représenté aux dessins comprend :

une source de courant continu constituée par des batteries 8 montées dans le châssis de l'engin ;

un convertisseur 9 d'énergie électronique réversible 24 V-600 Ampères, du type hacheur en pont en H quatre quadrants à conduction continue, destiné à alimenter l'induit 11 (Figures 7, 8, 10 et 11) d'un moteur 12, représenté en détail aux Figures 10 et 11, et comprenant un inducteur 13. Le moteur 12 est à excitation séparée variable, avec balais, et alimenté en 24 V maximum.

conformément à une caractéristique essentielle de l'invention, l'inducteur 13 du moteur 12 est constitué d'aimants 14 et de bobines d'excitation 16. La structure de ce moteur 12 sera décrite plus loin en détail en référence aux Figures 10 et 11 ;

un système électronique illustré à la Figure 9, assurant la commande du hacheur 9 et la régulation de la vitesse du moteur 12 par une dynamo-tachymétrique 17, avec boucle secondaire de courant dans l'induit 11 ;

un système électronique de commande du courant dans les bobines 16 de l'inducteur 13, capable de maintenir, durant les accélérations et décélérations, une tension de sortie du convertisseur 9 maximum, dans une plage de vitesses étendue. Ce système de commande du courant, dont un exemple de réalisation est représenté à la Figure 8, comprend :

a) une boucle A d'asservissement de l'intensité du courant I dans l'induit 11 à une valeur maximum prédéterminée ;

b) une boucle B d'asservissement de la tension de l'induit 11 à une valeur maximum prédéterminée ;

c) et une chaîne de comparaison C de la vitesse de rotation de la masse tournante avec une faible vitesse affichée, agencée pour maintenir le coefficient de couple du moteur 12 à une valeur maximum aux vitesses inférieures à la vitesse affichée ;

des systèmes de mise en service, de sécurité, de protection, d'anti-parasitage, et d'utilisation d'informations gyrométriques, connus en soi et non représentés ;

un réducteur de vitesses à engrenages entre le moteur 12 d'entraînement et la masse tournante (non représenté).

On décrira successivement les différentes parties mentionnées ci-dessus du dispositif visées par l'invention :

1) Description du moteur électrique 12 d'entraînement de la masse tournante (Figures 10 et 11)

Le moteur 12 est à courant continu 20 V-600 A à balais avec excitation séparée variable, et son inducteur (stator), indiqué par la référence globale 13 aux Figures 7 et 8, est constitué à la fois des aimants permanents 14, réalisés par exemple en un alliage samarium-cobalt, et de plusieurs bobines 16. Les aimants 14, au nombre de quatre dans cet exemple, sont collés aux extrémités des épanouissements des pièces polaires 18. Le fil électrique de chacune des bobines 16, également au nombre de quatre, est enroulé autour de sa pièce polaire 18 selon des surfaces parallèles à la portion de culasse 19 correspondante afin de pouvoir créer une induction magnétique de même direction, mais de sens opposé à celle des aimants 14. Le moteur 12 comporte également un induit 11 concentrique à son axe 10, l'ensemble étant disposé à l'intérieur d'une culasse cylindrique 19. Le moteur 12 est équipé de façon connue, de la dynamotachymétrique 17 et d'un collecteur 21, les autres éléments du moteur, représentés aux Figures 10 et 11 étant connus en soi, de sorte que ce moteur ne sera pas davantage décrit ici.

Les aimants 14 et les bobines 16 d'excitation constituent deux sources d'énergie magnétique placées en série dans le même circuit magnétique, et agissent ainsi toutes deux sur les mêmes parties des mêmes conducteurs de l'induit 11. D'autre part, le courant dans les bobines 16 de l'inducteur 13 est unidirectionnel, et l'augmentation de son intensité diminue progressivement le coefficient de couple K du moteur 12, qui est maximum lorsque les bobines ne sont pas alimentées. De plus, chaque aimant 14 et sa bobine correspondante 16 sont placés l'un au-dessus de l'autre entre la culasse 19 et l'axe 10, de façon à agir tous deux sur les mêmes parties des conducteurs de l'induit 11.

Le fonctionnement de l'inducteur (aimants 14 et bobines 16) est le suivant :

a) Lorsque les bobines 16 ne sont pas alimentées, le champ magnétique est donné uniquement par les aimants 14. Un flux traverse la culasse 19 et les pôles 18, mais en raison des fuites magnétiques une fraction seulement passe à travers l'armature de l'induit 11 : $\Phi_u$.

Par analogie électrique, on peut représenter le circuit magnétique créé par une paire de pôles 18 au moyen du schéma de la Figure 12, où les aimants 14 sont remplacés par des générateurs de flux NI. Avec :

$R_c$ = réluctance de la culasse 19

$R_e$ = réluctance d'entrefer 22

$R_d$ = réluctance de denture de l'induit 11

$R_a$ = réluctance d'armature

$R_f$ = réluctance de fuite

$R_p$ = réluctance des pièces polaires 18

La force magnétomotrice globale est :

$$F = \sum F_i = 2\,NI$$

$\alpha$ étant le coefficient de fuite (environ 1,2), le flux utile qui traverse l'armature est :

$$\Phi_u = \frac{\Phi_p}{\alpha}$$

Avec : $\Phi_p$ = flux polaire.

D'autre part, les forces magnétomotrices Fi le long du circuit magnétique (pôles 18, entrefer 22 denture, armature et culasse 19) se calculent de manière classique en appliquant les formules :

$$F_i = R_i\,\Phi = H_i \times \ell_i = \frac{B_i}{\mu_i} \times \ell_i = \frac{\Phi_i\,\ell_i}{\mu_i\,s_i}$$

Avec : $\Phi_i$ = flux dans la portion de circuit considérée.

$\ell_i$ = longueur de la portion de circuit magnétique de perméabilité $\mu_i$ et de surface $S_i$.

De plus, les $\Phi_i$ sont :

EP 0 152 339 B1

$$\Phi_e = \Phi_d = \Phi_u \quad \text{et} \quad \Phi_c = \Phi_p$$

En totalisant toutes ces forces magnétomotrices, on en déduit le nombre d'ampères-tours NI équivalent de l'aimant nécessaire par pôle pour obtenir le flux $\Phi_u$ qui entre dans la formule de détermination du coefficient de couple K :

$$K = \frac{PN\Phi_u}{a\,2\,\pi}$$

Avec :
P = nombre de paires de pôles
a = nombre de voies d'enroulement
N = nombre de brins actifs

b) Les bobines 16 montées en série sont maintenant alimentées au moyen du système de commande A, B, C de l'inducteur 13 mentionné plus haut.

Le sens du courant est tel que le champ magnétique créé est de sens opposé à celui des aimants 14. Le nombre d'ampères-tours par pôle 18 est ni, n étant le nombre de spires par pièce polaire.

La force magnétomotrice résultante est donc :

$$NI - ni = a - bi$$

Elle diminue proportionnellement au courant i envoyé dans les bobines 16.

$\Phi_u$ peut donc être modulé en agissant sur ce courant. Autrement dit, le coefficient de couple du moteur 12 est maximum lorsque i est nul, et diminue lorsque i augmente.

2) Description du système électronique de commande du courant dans les bobines 16 de l'inducteur 13 (Figure 8)

a) Boucle A d'asservissement de l'intensité du courant dans l'induit 11.

La boucle A comprend un organe d'affichage 23 du courant à une valeur de 580 A, des organes de recopie réalisée par la lecture et la mesure du courant dans l'induit 11, à savoir un shunt 24 et un amplificateur A2 ; un comparateur C2, deux amplificateurs-inverseurs A3 et A4, une alimentation à découpage 25, commandée en modulation de largeur d'impulsion, pouvant délivrer un courant unidirectionnel de 45A, l'alimentation 25 étant reliée aux bobines 16.

b) La boucle B d'asservissement de la tension aux bornes de l'induit 11 comprend les éléments suivants : un organe 26 d'affichage de la tension à une valeur fixe prédéterminée de 23 V, un organe de lecture 27 de la tension aux bornes de l'induit 11, un comparateur C3 de ces deux tensions, un amplificateur A5, une diode D1 qui a pour fonction de neutraliser l'effet de la chaîne de tension lorsque la force contre-électromotrice du moteur 12 est inférieure à 28 V, l'amplificateur-sommateur A4, qui est donc commun aux boucles d'asservissement A et B, et relié à l'alimentation à découpage 25.

c) La chaîne de comparaison C comprend un organe d'affichage 28 d'une valeur fixe de la vitesse de rotation ω du moteur 12 et de la masse tournante, faible par rapport à sa vitesse maximale, par exemple 20 % de cette dernière, un organe de lecture de la vitesse, constitué par la dynamo-tachymétrique 17, un comparateur C1, un inverseur A1 et une diode D2 reliée à la sortie de A1. Une résistance R1 est intercalée entre A3 et A4, une résistance R2 est interposée entre la diode D1 et A4, une résistance R3 est placée entre D2 et A3, et une résistance R4 est interposée entre C2 et A3.

3) Description du système de commande de l'induit 11 (Figure 9)

La partie « puissance » est réalisée au moyen du hacheur 9, 24 V-600 A. La conception classique est celle du pont en H quatre quadrants : deux sens pour le courant et la tension. Il s'agit donc d'un convertisseur d'énergie réversible, à conduction continue bidirectionnelle, avec récupération d'énergie dans les batteries lors du freinage.

La vitesse de la masse tournante est contrôlée par une boucle principale d'asservissement comprenant la dynamo-tachymétrique 17 (organe de recopie), entraînée par le rotor 11 (induit), un organe 31 d'affichage de la vitesse désirée, un comparateur C4, des amplificateurs A6 et A7 et une commande 32 du hacheur 9.

Ce système comporte également une boucle secondaire 33 du courant I dans l'induit 11, basée sur un comparateur C5 intercalé entre les amplificateurs A6 et A7, cette boucle secondaire ayant pour fonction de stabiliser l'ensemble de la chaîne d'asservissement, quelle que soit la valeur d'inertie de la masse entraînée. L'information de courant est également utilisée pour limiter ce dernier à 600 A.

7

La tension en sortie du hacheur 9, entre les points D et E, est modulée en largeur d'impulsions, sa valeur moyenne étant :

$$U_{moyen} = E + RI$$

La définition qui sera donnée ci-après des termes de cette équation permettra de constater que cette tension dépend de la vitesse et du couple demandés au moteur. En régime établi, c'est-à-dire lorsque la masse tournante a atteint la vitesse affichée, la tension en sortie du hacheur 9 se situe automatiquement à une valeur comprise entre 0 et 18 V.

Description du fonctionnement du dispositif d'entraînement en gisement de la masse tournante
Commande de l'inducteur 11 (Figure 8)

Pendant les phases d'accélération, le moteur 12 n'a pas encore atteint la vitesse demandée. Les amplificateurs de la commande de l'induit 11 sont alors saturés et la tension aux bornes du moteur $U_{moyen}$ est maximale et égale à 18 V, pour autant que le courant soit inférieur à 600 A.

Ce résultat est obtenu grâce à la boucle A d'asservissement à 580 A du courant dans l'induit 11, dont le fonctionnement est le suivant : si le courant I dans l'induit 11 a tendance à diminuer, la tension en sortie de C2 augmente, donc celle de A3 diminue, celle de A4 augmente, et le courant i dans les bobines 16 augmente. Le coefficient de couple K du moteur diminue, donc la f.c.e.m. E diminue.

$$Or, U = E + RI.$$

U étant fixe et égale à 18 V, le courant I augmente et retrouve la valeur affichée. On obtient donc une régulation du courant dans l'induit 11 à 580 A.

Durant les décélérations, le courant s'inverse dans le moteur 12 et atteint la valeur de limitation de 600 A. La boucle d'asservissement A du courant I à 580 A réagit alors en ayant pour effet de diminuer le courant i dans les bobines 16 de l'inducteur, donc d'augmenter le coefficient de couple K.

Comme le moteur tourne rapidement à cet instant, la f.c.é.m. E devient élevée, et le courant risquerait de devenir trop important, sa conduction se faisant en continu à travers les diodes (sans possibilité de limitation par les transistors). La boucle de régulation B de la tension de l'induit 11 a donc précisément pour effet de limiter la f.c.é.m. E à 28 V, le courant étant limité par la commande des transistors à 600 A. Cette régulation est réalisée de manière suivante :

Si la tension aux bornes du moteur 12 dépasse 23 V, la tension en sortie de A5 devient négative, la diode D1 conduit, la tension en sortie de A4 croît depuis quel que soit l'état de A3 (la résistance R2 étant plus faible que R1), et le courant i augmente.

Donc le coefficient de couple K diminue, et la tension de l'induit 11 décroît.

Pendant les phases où un fort couple est demandé (accélérations et décélérations), le dispositif maintient une tension de sortie du convertisseur 9 maximum à partir d'environ 20 % de la vitesse maximale.

Cela s'explique à partir de la formule donnant la tension instantanée U en sortie du hacheur 9 :

$$U = E + RI$$

où R = résistance totale de l'induit 11 et des câbles.

La valeur RI est imposée et vaut environ 5 V : R est donnée par construction, et I est fixé à 580 A (valeur qui peut être ajustée en fonction de la puissance demandée à l'équipement), juste en dessous du courant de limitation à 600 A pour lequel les composants sont dimensionnés.

Pour que U soit maximale (environ 18 V en sortie du convertisseur), il faut donc que E soit égal à :

$$E = U - RI = 18 - 5 = 13 \text{ V.}$$

Or, $E = K\omega$, avec $\omega$ = vitesse et K = coefficient de couple.

Donc en fonction de la vitesse, il faut que le coefficient de couple soit ajusté à la valeur :

$$K = 13/\omega.$$

Pour cela, le courant dans les bobines 16 de l'inducteur est ajusté de façon à ce que le courant dans l'induit I soit égal à 580 A, au moyen de la boucle d'asservissement A de ce courant, dont le fonctionnement a été expliqué ci-dessus. Si I augmente, E augmente.

Donc, pendant les accélérations, E reste constante et égale à 13 V à partir de 20 % de la vitesse maximale : plus la vitesse augmente, plus le coefficient de couple K diminue.

La valeur de 20 % est choisie de façon à ne pas imposer au moteur 12 un coefficient de couple trop important aux basses vitesses, ce qui d'ailleurs ne diminuerait le temps d'accélération que d'une quantité négligeable.

La puissance sur l'arbre moteur 10 du moteur 12 est :

$$P = c\omega = EI$$

EI est constant et égal à 13 × 580, soit 7 540 Watts.

La commande du moteur se fait donc à puissance maximale pendant une grande partie de la phase d'accélération.

Durant la décélération, le courant s'inverse dans l'induit 11, le moteur 12 devient générateur en renvoyant du courant dans les batteries 8 à travers les diodes de récupération du hacheur 9. On a alors la relation :

$$E = U + RI.$$

Il n'est plus alors possible de limiter le courant à 580 A en augmentant E. Pour éviter de détruire les diodes, on fixe la valeur maximale de I à 600 A en imposant à E de rester à une valeur égale à la tension minimale aux bornes des batteries 8, augmentée de toutes les chutes de tension (ligne, plus hacheur 9, plus moteur 12) : 28 V. Pour cela, la tension lue en sortie du hacheur 9 est asservie à la tension d'affichage donnée en 26, et égale à (28-RI), soit 23 V. Cette boucle de régulation B décrite précédemment agit sur le courant dans l'inducteur lorsque la tension en sortie du hacheur 9 croît jusqu'à 23 V (ce qui est le cas en particulier lors du freinage à pleine vitesse, le coefficient de couple K augmentant sous l'effet de la boucle d'asservissement A du courant dans l'induit 11). La boucle de tension B devient en effet prioritaire, son gain à l'entrée du sommateur A4 étant plus élevé.

Une partie importante de la décélération se fait ainsi à la puissance maximale de $EI = 28 \times 600 = 17$ kW.

## Fonctionnement du dispositif aux basses vitesses de rotation de la masse tournante

Aux basses vitesses, le courant i est nul dans les bobines 16, quelle que que soit la valeur du courant I dans l'induit 11.

Ce résultat est obtenu par la chaîne de comparaison C de la façon suivante : si la vitesse est inférieure à 20 % de la valeur maximale, cette valeur de 20 % étant affichée en 28, la tension en sortie de A1 est négative, la diode D2 conduit, et la sortie de A3 est alors nécessairement positive, R3 étant plus faible que R4. La sortie de A4 est donc négative, et le courant i dans les bobines 16 est nul.

Si par contre, la vitesse mesurée par la dynamotachymétrique 17 est supérieure à la valeur affichée en 28 de 20 % de $\omega_{maxi}$, A1 est positif, et donc séparé par la diode D2 de la boucle A de régulation du courant. La boucle A remplit alors la fonction décrite précédemment.

Aux basses vitesses, inférieures à 20 % de la vitesse maximale, le coefficient de couple K du moteur est ainsi maintenu maximum, même si le courant I est inférieur à la valeur de régulation de 580 A. Ce mode de fonctionnement est justifié par le fait que le coefficient K ne peut augmenter au-delà d'une certaine valeur, pour des raisons de réalisation. Il peut donc conserver cette valeur haute, E sera alors inférieure à 13 V, et le courant pourra varier de 0 jusqu'à sa valeur maximale de limitation à 600 A.

La masse tournante est utilisée pour pointer sur une cible à vitesse basse, et le moteur tourne le plus souvent à faible régime. Alors les bobines 16 ne consomment pas de courant.

Le coefficient de couple du moteur étant alors élevé, le courant nominal nécessaire pour vaincre les frottements est le plus petit possible, ce qui conduit à une consommation sur la génération et à des échauffements des coffrets et du moteur peu importants.

L'intérêt de ce mode de fonctionnement réside dans le fait que le moteur 12, mis en œuvre pour la commande en gisement d'une tourelle blindée ou de canons anti-aériens, n'est en pratique utilisé que rarement avec un faible coefficient de couple, c'est-à-dire à vitesse de rotation élevée. Ainsi la plupart du temps durant l'utilisation du dispositif, le courant i dans les bobines d'excitation de l'inducteur 13 est nul, de sorte que le bobinage peut être très concentré, que l'échauffement sera faible et l'encombrement réduit.

En effet, l'ensemble des composants du système pour les deux axes, autres que les motoréducteurs, peut se présenter sous la forme d'un ou deux coffrets étanches à refroidissement naturel par l'air ambiant (nombre en fonction de la place disponible dans la masse tournante).

Volume approximatif des coffrets : 40 litres

Poids des coffrets approximatif : 45 kg

Poids du moteur site : 15 kg

Poids du moteur 12 à excitation variable : 40 kg

Dimensions du moteur à excitation variable, avec la dynamo-tachymétrique 17 : longueur = 320 mm, diamètre = 220 mm.

Il convient de noter que le système électronique de commande régulée de l'inducteur 13 par les boucles d'asservissement A, B peut être remplacé par un autre dispositif, qui permet d'obtenir la loi de variation du coefficient de couple K d'une manière différente.

$E_{max}$ étant la f.c.e.m. maximum du moteur, constante et correspondant à 13 V, et la vitesse du moteur 12 étant mesurée par la dynamo-tachymétrique 17, on a :

$$K = E_{max}/\omega$$

Le système de commande est alors équipé d'un diviseur électronique qui calcule le rapport $E_{max}/\omega$. Le coefficient de couple K dépend par ailleurs du courant i selon la relation K = a—bi (a et b étant des constantes mentionnées précédemment à propos de la description du moteur 12). Un calculateur détermine alors l'intensité du courant en effectuant l'opération

$$i = \frac{a - \dfrac{E_{max}}{\omega}}{b}$$

Le résultat est utilisé comme ordre d'affichage à l'alimentation des bobines 16 de l'inducteur, de façon que lorsque le coefficient de couple K doit être élevé (aux faibles vitesses), le courant i soit nul, et qu'inversement ce courant ait la valeur voulue aux vitesses de rotation élevées pour que le coefficient K soit faible.

Ce système fonctionne donc en boucle ouverte. Il est moins performant cependant que le système d'asservissement en boucles fermées illustré à la Figure 8, car il ne peut être utilisé à chaque instant au maximum de ses possibilités. La loi de variation de K en fonction de i est en effet peu précise ; d'autre part, $E_{max}$ est une constante calculée pour une tension de batteries minimum, et qui donc ne peut être optimisée si la tension offerte par la génération est plus importante.

Les avantages du dispositif d'entraînement de la masse tournante selon l'invention par rapport aux systèmes antérieurs connus sont les suivants, en plus des avantages déjà cités :
— encombrement et poids faibles ;
— nombre de composants réduit au minimum : coffret pour la puissance et les asservissements, moteur d'entraînement ;
— coût de fabrication peu élevé ;
— récupération d'énergie lors du freinage ;
— niveau sonore faible (pas d'alimentation à parties tournantes) ;
— ce dispositif présente tous les avantages des systèmes à faible tension : utilisation immédiate de la génération existante sans modification, faible tension d'isolement des équipements et des connecteurs, sécurité pour l'équipage de l'engin ;
— absence des inconvénients des forts courants et par conséquent : faible dissipation de chaleur, bon rendement à puissance maximum, niveau de perturbation dans la ligne d'arrivée suffisamment bas pour ne pas nécessiter l'adjonction d'une alimentation stabilisée pour les appareils périphériques, nombre réduit de transistors « fort courant » onéreux, et câbles de section courante ($100\ mm^2$ maximum) ;
— courant dans le moteur faible aux vitesses de pointage ;
— puissance de pointe demandée à la génération modérée vis-à-vis des performances d'accélération obtenues : 14 kW. Le convertisseur 9 fournit en effet sa puissance maximum pendant une grande partie de la montée en vitesse.

## Exemple d'utilisation

a) inertie de la masse tournante : $40\ 000\ m^2 \cdot kg$
— vitesse maximale : 1 rd/s
— rapport de réduction choisi : 1/350
— coefficient de couple du moteur 12 : variable entre 0,05 et 0,16 m · N/A
— courant maximal dans l'inducteur 13 : 45A

b) la courbe donnant l'accélération γ en fonction de la vitesse ω est alors celle illustrée à la Figure 13. On voit sur celle-ci que la puissance est maximale et constante dans la plage 0,20-0,73 rd/s. Le couple maximum est de 33 000 mN.

c) Pendant la décélération à partir de la pleine vitesse, la courbe est celle illustrée à la Figure 14. La puissance de freinage est maximale durant la première moitié de la plage de vitesse.

A titre indicatif, le dispositif de commande de la masse tournante selon l'invention permet de faire exécuter à une masse tournante d'une inertie de $40\ 000\ m^2 \cdot kg$ un demi-tour, d'arrêt à arrêt, en 5,5 s environ, et ce en évitant comme expliqué ci-dessus, l'ensemble des inconvénients des systèmes antérieurs connus.

L'invention peut comporter de nombreuses variantes d'exécution : ainsi le nombre de bobines de l'inducteur 13 et d'aimants 14 pourrait être différent de quatre comme dans l'exemple de réalisation décrit, et les aimants pourraient être réalisés en des alliages différents du samarium-cobalt.

## EP 0 152 339 B1

**Revendications**

1. Dispositif d'entraînement électrique d'une masse tournante de forte inertie, comprenant, pour l'entraînement en gisement, un moteur électrique (12) pourvu d'un inducteur (13) et d'un induit (11) alimenté par une source de courant continu (8) par l'intermédiaire d'un convertisseur (9) d'énergie électronique destiné à alimenter l'induit (11) du moteur, caractérisé en ce que l'inducteur (13) comprend des pôles constitués chacun d'un aimant et d'une bobine d'excitation (16) à courant unidirectionnel, et chaque aimant (14) ainsi que sa bobine correspondante (16) sont placés l'un au-dessus de l'autre entre la culasse (19) et l'axe (10), de façon que ces deux sources d'énergie magnétique agissent toutes deux sur les mêmes parties des mêmes conducteurs de l'induit (11), et en ce que ce dispositif est pourvu d'un système électronique de commande du courant dans les bobines (16) de l'inducteur (13) capable de maintenir durant les accélérations et décélérations, une tension de sortie (U) du convertisseur (9) maximum dans une plage de vitesses étendue, le courant dans les bobines (16) de l'inducteur (13) étant unidirectionnel et l'augmentation de son intensité diminuant progressivement le coefficient de couple (K) du moteur (12), qui est maximum lorsque les bobines ne sont pas alimentées.

2. Dispositif selon la revendication 1, caractérisé en ce que les aimants (14) sont au moins deux et de préférence quatre, réalisés par exemple en un alliage samarium-cobalt, le fil électrique d'une bobine (16) étant enroulé autour de sa pièce polaire (18) selon des surfaces parallèles à la portion de culasse (19) correspondante afin de pouvoir créer une induction magnétique de même direction, mais de sens opposé à celle de l'aimant (14) correspondant.

3. Dispositif selon l'une des revendications 1 et 2, caractérisé en ce que le système électronique de commande du courant comprend :
— une boucle (A) d'asservissement du courant (I) dans l'induit (11) à une valeur maximum prédéterminée ;
une boucle (B) d'asservissement de la tension de l'induit (11) à une valeur maximum prédéterminée ;
— et une chaîne de comparaison (C) de la vitesse de rotation (ω) de la masse tournante avec une faible vitesse affichée pour maintenir le coefficient de couple (K) à une valeur maximum aux vitesses inférieures à la vitesse affichée, en maintenant à une valeur nulle le courant (i) dans les bobines (16) quelle que soit la valeur du courant (I) dans l'induit (11).

4. Dispositif selon la revendication 3, caractérisé en ce que la boucle d'asservissement (A) de l'intensité (I) du courant dans l'induit (11) à une valeur d'affichage donnée, comprend des organes de recopie (24, A2) par lecture et mesure du courant (I) dans l'induit (11), un comparateur (C2), deux amplificateurs-inverseurs (A3, A4) et une alimentation à découpage (25) reliée aux bobines (16) de l'inducteur (13), commandée par exemple en modulation de largeur d'impulsions pouvant délivrer un courant unidirectionnel.

5. Dispositif selon l'une des revendications 3 et 4, caractérisé en ce que la boucle d'asservissement (B) de la tension aux bornes de l'induit (11) comprend un organe d'affichage (26) de la tension à une valeur fixe prédéterminée, un organe (27) de lecture de la tension aux bornes de l'induit (11), un comparateur (C3), un amplificateur (A5) relié au comparateur et un amplificateur-sommateur (A4) relié à l'alimentation à découpage (25), cette boucle (B) commandant une augmentation de l'intensité du courant et par conséquent une diminution du coefficient de couple (K) et de la tension de l'induit (11) si la tension aux bornes de ce dernier dépasse la valeur fixe affichée, de sorte que la tension est régulée à ladite valeur fixe tandis que l'intensité du courant est limitée à une valeur maximum prédéterminée par la commande des transistors de puissance du convertisseur (9) d'énergie.

6. Dispositif selon l'une des revendications 4 et 5, caractérisé en ce que la chaîne de comparaison (C) comprend un organe d'affichage (28) de la vitesse de rotation (ω) du moteur et de la masse tournante à une valeur faible par rapport à sa vitesse maximale, par exemple 20 %, un organe de lecture de la vitesse tel qu'une dynamo-tachymétrique (17), un comparateur (C1) de ces deux valeurs, un inverseur (A1) et une diode (D2) reliée à la boucle d'asservissement (A) du courant, de telle sorte que la tension en sortie du second amplificateur-inverseur (A4) de cette boucle soit négative et que le courant (i) dans les bobines (16) de l'inducteur soit nul lorsque la vitesse de la masse tournante est inférieure à la valeur affichée, et qu'inversement lorsque cette vitesse est supérieure à la valeur affichée, la diode (D2) sépare la chaîne de comparaison (C) de la boucle d'asservissement (A) du courant (I).

7. Dispositif selon la revendication 1, caractérisé en ce qu'il comprend un organe de lecture de la vitesse (ω) du moteur, par exemple une dynamo-tachymétrique (17), un diviseur électronique pour calculer $E_{max}/\omega$, $E_{max}$ étant la force contre électromotrice maximum imposée au moteur (12), un calculateur capable de déterminer l'intensité du courant

$$i = \frac{a - \dfrac{E_{max}}{\omega}}{b}$$

où a et b sont des constantes de construction du moteur, la valeur de i ainsi calculée représentant l'intensité du courant envoyé dans les bobines (16) de l'inducteur (13) de façon à obtenir un coefficient de couple tel que la tension de sortie (U) du convertisseur (9) soit maximum.

11

8. Moteur électrique à courant continu avec excitation séparée variable, destiné à équiper un dispositif d'entraînement d'une masse tournante de force d'inertie, comprenant un inducteur (13) et un induit (11), caractérisé en ce que l'inducteur (13) comprend des pôles constitués chacun d'un aimant et d'une bobine d'excitation (16) à courant unidirectionnel, et chaque aimant (14) ainsi que sa bobine correspondante (16) sont placés l'un au-dessus de l'autre entre la culasse (19) et l'axe (10), de façon que ces deux sources d'énergie magnétique agissent toutes deux sur les mêmes parties des mêmes conducteurs de l'induit (11).

9. Moteur selon la revendication 8, caractérisé en ce que, les aimants (14) étant au moins deux et de préférence quatre, le fil électrique de chaque bobine (16) est enroulé autour de sa pièce polaire (18) selon des surfaces parallèles à la portion de culasse (19) correspondante afin de pouvoir créer une induction magnétique de même direction, mais de sens opposé des aimants (14).

## Claims

1. Electrical drive device for a rotatable mass having a high inertia, comprising, for lateral driving movement, an electric motor (12) provided with an inductor (13) and an armature (11) supplied with power by a dc source (8) through an electronic energy converter (9) adapted to supply power to the armature (11) of the motor, characterised in that the inductor (13) comprises poles each consisting of a magnet and a unidirectional current excitation coil (16), and each magnet (14) and the corresponding coil (16) are placed one above the other between the yoke (19) and the spindle (10), so that these two sources of magnetic energy act on the same regions of the same conductors of the armature (11), and in that this device is provided with an electronic control system for the current in the coils (16) of the inductor (13) capable of maintaining, during acceleration and deceleration, an output voltage (U) of the converter (9) which is maximum over a wide range of speeds, the current in the coils (16) of the inductor (13) being unidirectional and the increase in its intensity progressively decreasing the torque coefficient (K) of the motor (12), which is maximum when the coils are not supplied with power.

2. Device according to claim 1, characterised in that the magnets (14) are at least two in number and preferably four in number and are made for example from a samarium-cobalt alloy, the electric conductor of a coil (16) being wound around its pole piece (18) along surfaces parallel to the corresponding yoke portion (19) so as to be adapted to establish a magnetic induction parallel to but in the opposite sense to that of the corresponding magnet (14).

3. Device according to one of claims 1 and 2, characterised in that the electronic control system for the current comprises :
— a servocontrol (A) controlling the current (I) in the armature (11) at a predetermined maximum value ;
— a servocontrol (B) controlling the voltage of the armature (11) at a predetermined maximum value ;
— and a comparator circuit (C) comparing the speed of rotation ($\omega$) of the rotatable mass with a low set speed so as to maintain the torque coefficient (K) at a maximum value at speeds lower than the set speed by maintaining at zero the current (i) in the coils (16) irrespective of the value of the current (I) in the armature (11).

4. Device according to claim 3, characterised in that the servocontrol (A) for the intensity (I) of the current in the armature (11) at a given set value comprises means (24, A2) for reading and measuring the current (I) in the armature (11), a comparator (C2), two amplifier-inverters (A3, A4) and a chopping supply (25) connected to the coils (16) of the inductor (13), controlled, for example, by modulation of the pulse width and capable of delivering a unidirectional current.

5. Device according to one of claims 3 and 4, characterised in that the servocontrol (B) of the voltage at the terminals of the armature (11) comprises means (26) for setting the voltage at a predetermined fixed value, means (27) for reading the voltage at the terminals of the armature (11), a comparator (C3), an amplifier (A5) connected to the comparator and an amplifier-adder (A4) connected to the chopping supply (25), this servocontrol (B) controlling an increase in the intensity of the current and consequently a reduction in the torque coefficient (K) and the voltage of the armature (11) if the voltage at the terminals of said armature exceeds the fixed set value, so that the voltage is regulated to the fixed level whereas the intensity of the current is limited to a maximum value predetermined under the control of the power transistors of the energy converter (9).

6. Device according to one of claims 4 and 5, characterised in that the comparator circuit (C) comprises means (28) for setting the speed of rotation ($\omega$) of the motor and of the rotatable mass at a low value compared with its maximum speed, for example 20 %, means for reading the speed such as a dynamotachymetric element (17), a comparator (C1) for these two values, an inverter (A1) and a diode (D2) connected to the servocontrol (A) of the current, so that the output voltage of the second amplifier-inverter (A4) of the servocontrol is negative and the current (i) in the coils (16) of the inductor is zero when the speed of the rotatable mass is less than the set value, and inversely, when this speed is higher than the set value, the diode (D2) separates the comparator circuit (C) from the servocontrol (A) for the current (I).

7. Device according to claim 1, characterised in that it comprises means for reading the speed ($\omega$) of

the motor, for example a dynamo-tachymetric element (17), an electronic divider for calculating $E_{max}/\omega$, $E_{max}$ being the maximum counter-electromotive force imposed on the motor (12), a calculator capable of determining the intensity of the current

$$i = \frac{a - \dfrac{E_{max}}{\omega}}{b}$$

where a and b are constructional constants of the motor, the value of i thus calculated representing the intensity of the current sent to the coils (16) of the inductor (13) so as to obtain a torque coefficient such that the output voltage (U) of the converter (9) is maximum.

8. Electric motor with separate variable direct current excitation, adapted to equip a device for driving a rotatable mass having high inertia, comprises an inductor (13) and an armature (11), characterised in that the inductor (13) comprises poles each consisting of a magnet and a unidirectional current excitation coil (16) and each magnet (14) and its corresponding coil (16) being placed one above the other between the yoke (19) and the spindle (10), so that these two sources of magnetic energy both act on the same regions of the same conductors of the armature (11).

9. Motor according to claim 8, characterised in that, there being at least two and preferably four magnets (14), the electric conductor of each coil (16) is wound round the pole piece (18) thereof along surfaces parallel to the corresponding yoke portion (19) so as to be adapted to establish a magnetic induction parallel to but in the opposite sense to that of the magnets (14).

**Patentansprüche**

1. Elektrische Antriebseinrichtung für eine drehende Masse großer Trägheit, mit einem für den Anstellwinkelantrieb vorgesehenen Elektromotor (12), der einen Induktor (13) und einen Anker (11) aufweist, welcher von einer Gleichstromquelle (8) mit Hilfe eines Wandlers (9) für elektrische Energie, der zur Speisung des Ankers (11) des Motors bestimmt ist, gespeist ist, dadurch gekennzeichnet, daß der Induktor (13) Pole aufweist, die jeweils aus einem Magneten und einer von einem einseitig gerichteten Strom durchflossenen Erregerspule (16) bestehen, und daß jeder Magnet (14), sowie die jeweilige Spule (16) übereinander zwischen dem Magnetjoch (19) und der Achse (10) angeordnet sind, derart daß diese beiden Quellen magnetischer Energie beide auf die gleichen Teile der gleichen Leiter des Ankers (11) wirken, und daß die Einrichtung in den Spulen (16) des Induktors (13) ein elektronisches Stromsteuersystem aufweist, das in der Lage ist, während Beschleunigungs- und Bremsvorgängen eine maximale Ausgangsspannung (U) des Wandlers (9) in einem breiten Geschwindigkeitsbereich aufrechtzuerhalten, wobei der Strom in den Spulen (16) des Induktors (13) einseitig gerichtet ist und wobei die Erhöhung seiner Intensität den Drehmomentkoeffizienten (K) des Motors (12) fortlaufend verringert, welcher ein Maximum ist, wenn die Spulen nicht gespeist sind.

2. Einrichtung nach Anspruch 1, dadurch gekennzeichnet, daß mindestens zwei, vorzugsweise vier Magnete (14) vorgesehen sind, welche zum Beispiel aus einer Samarium-Kobalt-Legierung bestehen, wobei der elektrische Draht einer Spule (16) den parallelen Flächen der entsprechenden Magnetjochabschnitte (19) folgend um ihren Polschuh (18) gewickelt ist, derart, daß eine Magnetinduktion gleicher Richtung erzeugt wird, die jedoch entgegen der Induktionsrichtung des entsprechenden Magneten (14) verläuft.

3. Einrichtung nach einem der Ansprüche 1 und 2, dadurch gekennzeichnet, daß das elektronische Stromsteuersystem aufweist :
— einen Regelkreis (A) mit vorgegebenem Höchstwert für den Strom (I) im Anker (11) ;
— einen Regelkreis (B) mit vorgegebenem Höchstwert für die Spannung des Ankers (11) ; und
— eine Vergleichskette (C), für den Vergleich der Rotationsgeschwindigkeit (ω) der drehenden Masse mit einer geringen vorgegebenen Geschwindigkeit, um den Drehmomentkoeffizienten (K) bei geringeren Geschwindigkeiten als der vorgegebenen Geschwindigkeit auf einem Höchstwert zu halten, indem der Strom (i) in den Spulen (16) auf einem Null-Wert gehalten wird, unabhängig von der Größe des Wertes des Stroms (I) in dem Anker (11).

4. Einrichtung nach Anspruch 3, dadurch gekennzeichnet, daß der Regelkreis (A) zum Regeln der Stärke (I) des Stroms im Anker (11) auf einen vorgegebenen Sollwert aufweist Nachführungsorgane (24, A2) zum Aufnehmen und zum Messen des Stroms (I) im Anker (11), einen Komparator (C2), zwei Umkehrverstärker (A3, A4) und eine unterbrechbare Stromquelle (25), die mit den Spulen (16) des Induktors (13) verbunden ist und zum Beispiel durch Pulsweitenmodulation gesteuert werden kann und die einen einseitig gerichteten Strom abgeben kann.

5. Einrichtung nach einem der Ansprüche 3 und 4, dadurch gekennzeichnet, daß der Regelkreis (B) für die Spannung an den Anschlüssen des Ankers (11) aufweist ein Vorgabeorgan (26) mit einem festen vorgegebenen Spannungswert, ein Organ (27) zur Aufnahme der Spannung an den Anschlüssen des Ankers (11), einen Komparator (C3), einen mit dem Komparator verbundenen Verstärker (A5), und einen mit der unterbrechbaren Stromquelle (25) verbundenen Summierverstärker (A4), wobei der Regelkreis (B) die Erhöhung der Stromstärke steuert und damit den Drehmomentkoeffizienten (K) und die Spannung des Ankers (11) reduziert, wenn die Spannung an den Anschlüssen des Ankers den fest vorgegebenen Wert übersteigt, derart, daß die Spannung auf den festen Wert geregelt wird, während die Stromstärke durch Steuerung von Leistungstransistoren des Energiewandlers (9) auf einen vorgegebenen Höchstwert begrenzt wird.

6. Einrichtung nach einem der Ansprüche 4 und 5, dadurch gekennzeichnet, daß die Vergleichskette (C) aufweist ein Vorgabeorgan (28) für die Einstellung der Rotationsgeschwindigkeit ($\omega$) des Motors und der drehenden Masse auf einen Wert, der im Vergleich zu seiner Höchstgeschwindigkeit niedrig ist, zum Beispiel 20 % beträgt, ein zum Beispiel dynamo-tachometrisches Geschwindigkeitsableseorgan (17), einen beide Geschwindigkeiten vergleichenden Komparator (C1), einen Inverter und eine Diode (D2), die derart mit dem Stromregelkreis (A) verbunden ist, daß die Ausgangsspannung des zweiten Umkehrverstärkers (A4) des Regelkreises negativ ist und daß der Strom (i) in den Spulen (16) des Induktors null ist, wenn die Geschwindigkeit der drehenden Masse unter dem vorgegebenen Wert liegt, und daß, umgekehrt, bei einer Geschwindigleit oberhalb des vorgegebenen Wertes die Diode (D2) die Vergleichskette (C) vom Regelkreis (A) des Stroms (I) trennt.

7. Einrichtung nach Anspruch 1, dadurch gekennzeichnet, daß sie aufweist ein Aufnahmorgan, zum Beispiel ein dynamo-tachometrisches Organ (17), zum Ablesen der Geschwindigkeit ($\omega$) des Motors, einen elektronischen Teiler zur Berechnung von $E_{max}$/wobei $E_{max}$ die maximale auf den Motor (12) wirkende gegenelektromotorische Kraft ist, einen Kalkulator, der in der Lage ist, die Stromstärke

$$i = \frac{a - \dfrac{E_{max}}{\omega}}{b}$$

zu bestimmen, wobei a und b Konstruktionskonstanten des Motors sind und wobei der Wert des so berechneten i die Stärke des den Spulen (16) des Induktors (13) zugeführten Stroms ist, um einen derartigen Drehmomentkoeffizienten zu erhalten, daß die Ausgangsspannung (U) des Wandlers (9) einen Höchstwert annimmt.

8. Gleichstromelektromotor mit variabler Fremderregung zur Ausrüstung einer Antriebseinrichtung einer drehenden Masse großer Trägheit, mit einem Induktor (13) und einem Anker (11), dadurch gekennzeichnet, daß der Induktor (13) Pole aufweist, die jeweils aus einem Magneten und einer von einem einseitig gerichteten Strom durchflossenen Erregerspule (16) bestehen, und daß jeder Magnet, wie auch seine entsprechende Spule (16) übereinander zwischen dem Magnetjoch (19) und der Achse (10) derart angeordnet sind, daß diese beiden Quellen magnetischer Energie auf den gleichen Abschnitt der gleichen Leiter des Ankers (11) wirken.

9. Motor nach Anspruch 8, dadurch gekennzeichnet, daß mindestens zwei, vorzugsweise vier Magnete (14) vorgesehen sind, wobei der elektrische Draht jeder Spule (16) den zu den entsprechenden Abschnitten des Magnetjochs (19) parallelen Flächen folgend um ihren Polschuh (18) gewickelt ist, um eine Magnetinduktion gleicher Richtung zu schaffen, die jedoch entgegen derjenigen der Magnete (14) verläuft.

FIG.1

FIG.2

FIG.3

FIG.4

## FIG.5

1000A → 7 1000A →

24V 20V 3

1

## FIG.6

## FIG.7

600A →

645A 9 20V 11

8 24V

45A →

A-B-C 20V 16

13

FIG.8

EP 0 152 339 B1

## FIG.9

EP 0 152 339 B1

## FIG.10

## FIG.11

FIG.12

$R_c$

NI     NI

$R_p$   $R_e$   $R_d$   $R_a$   $R_d$   $R_e$   $R_p$

$R_f$

FIG.13

$\gamma$

$0,70\,rd/s^2$

$\gamma = \dfrac{0,14}{\omega}$

$0,19\,rd/s^2$

$0$   $0,20$   $0,73$   $1$   $\omega(rd/s)$

FIG.14

$\gamma$

$\gamma' = \dfrac{0,48}{\omega}$

$0,96\,rd/s^2$

$0,48\,rd/s^2$

$1$   $0,5$   $0$   $\omega(rd/s)$